# EUROPEAN PATENT APPLICATION

(11) **EP 4 733 651 A1**
(43) Date of publication of application: **29.04.2026**
(21) Application number: 25191172.3
(22) Date of filing: 23.07.2025
(51) Int. Cl.: F16M 11/32, F16B 7/14

(54) **SUPPORT LEG ASSEMBLY AND TELESCOPIC BRACKET**

(30) Priority: 24.10.2024 CN 202411494661
(71) Applicant: Shenzhen Leqi Innovation Co., Ltd., Shenzhen, Guangdong 518000 (CN)
(72) Inventor: PAN, Zhiqiang, Shenzhen, 518000 (CN); TANG, Shaorui, Shenzhen, 518000 (CN)
(74) Representative: Valet Patent Services Limited

(57) **Abstract**

A support leg assembly and a telescopic bracket are provided. The support leg assembly includes a tube assembly (10), a first locking mechanism (20), and a driving mechanism (5). The tube assembly includes a first tube (11) and a first telescopic tube (12). The first locking mechanism includes a mounting component (21), a sliding component (22), and a first locking component (23). The driving mechanism includes a driving component (52) configured to drive the sliding component to slide relative to the mounting component. The first locking component is capable of elastically deforming and coming into contact with an inner wall of the first tube in a case that the first locking component is in contact with the mounting component, to lock the first tube and the first telescopic tube. When the mounting component or the sliding component is separated from the first locking component, the deformation of the first locking component is restored and the locking is released.

## Description

### TECHNICAL FIELD

The present disclosure relates to the field of photography auxiliary equipment, and in particular, to a support leg assembly and a telescopic bracket.

### BACKGROUND

A bracket is a structure that provides a support. The bracket has been widely used in work and daily life, such as a camera tripod, and a bracket for measurement instruments. Taking a camera tripod or monopod as an example, such a bracket is used to stabilize the camera to achieve certain photographic effects, which is particularly important. In the related art, the camera tripod is typically adjusted and locked from the outside, for example, by using a screw or an annular sleeve to clamp the telescopic legs, which is cumbersome.

### SUMMARY

The present disclosure provides a support leg assembly and a telescopic bracket, to solve the problem of inconvenient operation brought by externally locking the telescopic tubes.

The present disclosure provides a support leg assembly, including: a tube assembly, including a first tube and a first telescopic tube sleeved with the first tube; a first locking mechanism, including a mounting component arranged on the first telescopic tube, a sliding component slidably connected with the mounting component along an axial direction of the mounting component, and a first locking component arranged on the sliding component; and a driving mechanism, including a driving component arranged outside the tube assembly, and the driving component being configured to drive the sliding component to slide relative to the mounting component, to allow the mounting component to contact or move away from the first locking component. The first locking component is capable of elastically deforming and coming into contact with an inner wall of the first tube in a case that the first locking component is in contact with the mounting component, to lock the first tube and the first telescopic tube.

In some embodiments, the mounting component includes a first piston cylinder; the sliding component includes a first piston fitted with the first piston cylinder, and a first piston rod arranged on the first piston. The first piston cylinder is communicated with the driving component.

In some embodiments, a passage communicated with the first piston cylinder is defined inside the first piston rod; and the driving mechanism further includes a connection tube accommodated in the first tube and configured to communicate the driving component with the passage.

In some embodiments, the tube assembly further includes a second telescopic tube arranged in the first telescopic tube, and the second telescopic tube is slidably connected with the first telescopic tube along an axial direction of the first telescopic tube; the support leg assembly further includes a second locking mechanism arranged at an end of the tube assembly away from the first locking mechanism, and the second locking mechanism is configured to lock or unlock the second telescopic tube; and the first locking mechanism and the second locking mechanism are interlinked.

In some embodiments, an end of the sliding component away from the first locking component is a connection end, and the connection end is located outside the mounting component and is configured to be connected with the second locking mechanism.

In some embodiments, the connection end extends into the second telescopic tube; and the second locking mechanism includes a bladder arranged at the connection end, the bladder is communicated with the driving component, and the bladder is capable of expanding to lock the second telescopic tube.

In some embodiments, the tube assembly further includes a transmission tube arranged between the second telescopic tube and the first telescopic tube, and the transmission tube is slidably connected with the second telescopic tube along an axial direction of the second telescopic tube; and the connection end is provided with a connection component, an end of the transmission tube is fixedly connected with the connection component, and another end of the transmission tube away from the connection component is connected with the second locking mechanism.

In some embodiments, the second locking mechanism further includes: a second locking component arranged at an end of the first telescopic tube away from the first locking mechanism; and a second pushing component arranged at an end of the transmission tube away from the first locking mechanism. The second pushing component is capable of docking with the second locking component, to allow the second locking component to elastically deform and contact an outer wall of the second telescopic tube, so as to lock the first telescopic tube and the second telescopic tube.

In some embodiments, the support leg assembly further incudes: a limiting assembly connecting the first telescopic tube and the transmission tube. The limiting assembly is configured to limit a travel distance of relative sliding between the first telescopic tube and the transmission tube.

In some embodiments, the driving mechanism further includes: an elastic component elastically connected to the mounting component. The elastic component is configured to provide an elastic force to reset the mounting component and allow the first locking component to be locked; the elastic component is located in the first piston cylinder, an end of the elastic component is connected with the first piston, and the other end of the elastic component is connected with an inner wall of the first piston cylinder; or, the elastic component is located outside of the mounting component and abuts against a bottom end of the mounting component.

The present disclosure further provides a support leg assembly, including: a tube assembly, including a first tube and a first telescopic tube sleeved with the first tube; a first locking mechanism, including a mounting component arranged on the first telescopic tube, a sliding component slidably connected with the mounting component along an axial direction of the mounting component, a first locking component arranged on the mounting component, and a first pushing component arranged on the sliding component; and a driving mechanism, including a driving component arranged outside the tube assembly, and the driving component being configured to drive the sliding component to slide relative to the mounting component, to allow the first pushing component to contact or move away from the first locking component. The first locking component is capable of elastically deforming and coming into contact with an inner wall of the first tube in a case that the first locking component is in contact with the first pushing component, to lock the first tube and the first telescopic tube.

In some embodiments, the mounting component includes a first piston cylinder; the sliding component includes a first piston fitted with the first piston cylinder, and a first piston rod arranged on the first piston. The first piston cylinder is communicated with the driving component; a passage communicated with the first piston cylinder is defined inside the first piston rod; and the driving mechanism further includes a connection tube accommodated in the first tube and configured to communicate the driving component with the passage.

In some embodiments, the tube assembly further includes a second telescopic tube arranged in the first telescopic tube, and the second telescopic tube is slidably connected with the first telescopic tube along an axial direction of the first telescopic tube; the support leg assembly further includes a second locking mechanism arranged at an end of the tube assembly away from the first locking mechanism, and the second locking mechanism is configured to lock or unlock the second telescopic tube; and the first locking mechanism and the second locking mechanism are interlinked.

In some embodiments, an end of the sliding component away from the first locking component is a connection end, and the connection end is located outside the mounting component; the tube assembly further includes a transmission tube arranged between the second telescopic tube and the first telescopic tube, and the transmission tube is slidably connected with the second telescopic tube along an axial direction of the second telescopic tube; and the connection end is provided with a connection component, an end of the transmission tube is fixedly connected with the connection component, and another end of the transmission tube away from the connection component is connected with the second locking mechanism.

In some embodiments, the second locking mechanism further includes: a second locking component arranged at an end of the first telescopic tube away from the first locking mechanism; and a second pushing component arranged at an end of the transmission tube away from the first locking mechanism. The second pushing component is capable of docking with the second locking component, to allow the second locking component to elastically deform and contact an outer wall of the second telescopic tube, so as to lock the first telescopic tube and the second telescopic tube.

The present disclosure further provides a telescopic bracket, including a mounting base and the support leg assembly according to any of the of foregoing embodiments. The tube assembly is rotatably arranged on the mounting base, and the driving component is arranged on the mounting base.

In some embodiments, the driving component includes: a second piston cylinder arranged on the mounting base; a second piston fitted with the second piston cylinder; and a second piston rod arranged on the second piston, the second piston cylinder being communicated with the passage through the connection tube. The driving mechanism further includes a handle arranged on the mounting base, the handle is configured to pull the second piston rod to move to unlock the first tube and the first telescopic tube, and the handle is driven to reset so as to lock the first tube and the first telescopic tube in a case that the second piston rod is reset.

In some embodiments, the support leg assembly is one of at least three support leg assemblies, and the driving component is configured to drive the at least three support leg assemblies to be synchronously locked or synchronously unlocked.

The present disclosure provides a support leg assembly and a telescopic bracket. The support leg assembly includes a tube assembly, a first locking mechanism, and a driving mechanism. The tube assembly includes a first tube and a first telescopic tube. The first locking mechanism includes a mounting component arranged on the first telescopic tube, a sliding component slidably connected with the mounting component along the axial direction, and a first locking component connected with the mounting component. The driving mechanism includes a driving component arranged outside the tube assembly, and is configured to drive the sliding component to slide relative to the mounting component, to allow the sliding component or the mounting component to contact or move away from the first locking component. After contacting the sliding component or the mounting component, the first locking component is capable of elastically deforming and coming into contact with the inner wall of the first tube, thereby locking the first tube and the first telescopic tube. When the mounting component or the sliding component is separated from the first locking component, the deformation of the first locking component is restored and the locking is released, such that the first tube and the first telescopic tube slide telescopically again. The entire locking and unlocking processes may be controlled by an external driving component, realizing rapid switching.

### BRIEF DESCRIPTION OF THE DRAWINGS

FIG. 1 is a schematic structural diagram of a telescopic bracket according to an embodiment of the present disclosure.
FIG. 2 is a cross-sectional view of a support leg assembly according to an embodiment of the present disclosure.
FIG. 3 is a schematic structural diagram of a first locking mechanism according to an embodiment of the present disclosure.
FIG. 4 is a schematic structural diagram of a tube assembly and a second locking mechanism according to an embodiment of the present disclosure.
FIG. 5 is a cross-sectional view of a support leg assembly according to another embodiment of the present disclosure.
FIG. 6 is a schematic structural diagram of a driving mechanism according to an embodiment of the present disclosure.
FIG. 7 is a working principal diagram showing a locking operation of a driving mechanism and a first locking mechanism according to an embodiment of the present disclosure.
FIG. 8 is a working principal diagram showing an unlocking operation of the driving mechanism and the first locking mechanism according to an embodiment of the present disclosure.

The objective realization, functional features and advantages of the present disclosure will be further described with reference to the accompanying drawings in conjunction with the embodiments.

### DETAILED DESCRIPTION OF THE EMBODIMENTS

The technical solutions in the embodiments of the present disclosure will be described clearly and completely with reference to the accompanying drawings in the embodiments of the present disclosure. Obviously, the described embodiments are only a part of the embodiments of the present disclosure rather than all of them. Based on the embodiments in the present disclosure, all other embodiments obtained by those skilled in the art without creative work shall fall within the scope of protection of the present disclosure.

It should be noted that all directional indications (such as up, down, left, right, front, back) in the embodiments of the present disclosure are merely configured to explain relative position relationships or motion conditions between the components in a specific attitude (as shown in the drawings). The directional indication changes as the specific attitude changes.

It should be noted that when an element is described as "being fixed on" or "being arranged on" another element, the element may be directly arranged on the another element or there may be an intermediate element. When an element is described as "being connected to" another element, the element may be directly connected to the another element or there may be an intermediate element.

Moreover, the terms "first", "second", and the like in the present disclosure are merely used for description and cannot be understood as indicating or implying their relative importance or as implicitly indicating the quantity of the technical features indicated. Thus, the feature defined by "first" or "second" may explicitly or implicitly include at least one such feature. In addition, the technical solutions of various embodiments may be combined with each other, but must be based on that the combined technical solutions can be implemented by those skilled in the art. When the combination of the technical solutions is contradictory or impossible to realize, it shall be considered that such combination does not exist and is not within the scope of protection of the present disclosure.

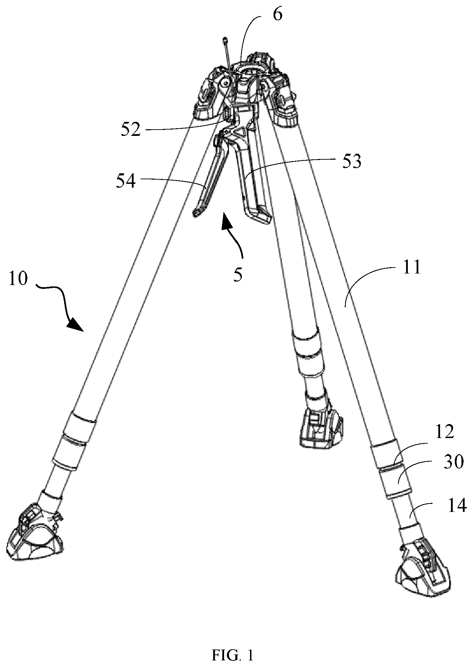

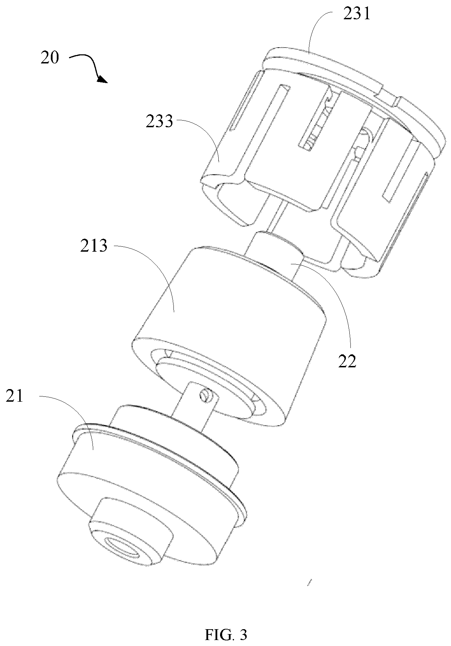

The present disclosure provides a support leg assembly. Referring to FIG. 1 to FIG. 3, the support leg assembly includes: a tube assembly 10, including a first tube 11 and a first telescopic tube 12 sleeved with the first tube 11; a first locking mechanism 20, including a mounting component 21 arranged on the first telescopic tube 12, a sliding component 22 slidably connected with the mounting component 21 along the axial direction of the mounting component 21, and a first locking component 23 connected with the first telescopic tube 12; and a driving mechanism 5, including a driving component 52 arranged outside the tube assembly 10. The driving component 52 is configured to drive the sliding component 22 to slide relative to the mounting component 21, to allow the sliding component 22 or the mounting component 21 to contact or move away from the first locking component 23. In the case that the first locking component 23 is in contact with the sliding component 22 or the mounting component 21, the first locking component 23 is capable of elastically deforming and coming into contact with the inner wall of the first tube 11, thereby locking the first tube 11 and the first telescopic tube 12.

In the embodiments, the first telescopic tube 12 being sleeved with the first tube 11 means that the first tube 11 is sleeved on the outside of the first telescopic tube 12, and the two can slide axially. The first locking mechanism 20 is located inside the first tube 11 and may be arranged at an end of the first telescopic tube 12. The mounting component 21 and the sliding component 22 may have a structure of a hydraulic cylinder or a pneumatic cylinder. The hydraulic cylinder or the pneumatic cylinder includes a cylinder body and a push rod slidably connected to the cylinder body. The mounting component 21 serves as the cylinder body, and the sliding component 22 serves as the push rod. The driving component 52 may be an external hydraulic cylinder or an external pneumatic cylinder, and the cylinder body of the external hydraulic cylinder is communicated with the cylinder body of the hydraulic cylinder inside the tube assembly 10 via a connection tube 51.

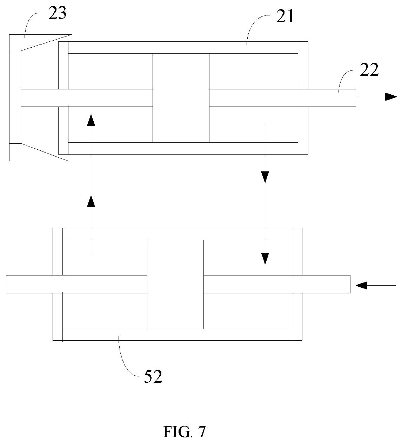

Referring to FIG. 7, forward work is done on the external hydraulic cylinder, and the push rod of the external hydraulic cylinder moves leftward. Medium in the left chamber of the external hydraulic cylinder is transferred to the left chamber of the internal hydraulic cylinder, and pushes the push rod of the internal hydraulic cylinder to move rightward. Consequently, the mounting component 21 comes into contact with the first locking component 23, and the first locking component 23 is elastically deformed and contacted with the inner wall of the first tube 11. Under the action of friction, the first locking component 23 and the first tube 11 remain in a locked state.

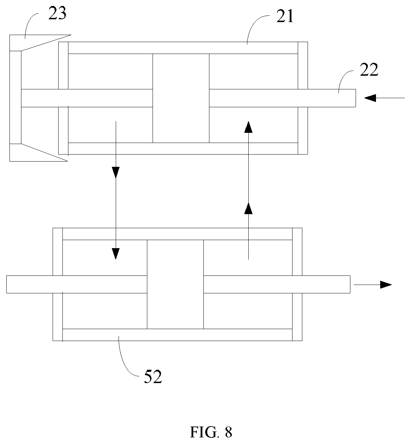

Referring to FIG. 8, backward work is done on the external hydraulic cylinder, and the push rod of the external hydraulic cylinder moves rightward. The medium in the right chamber of the external hydraulic cylinder is transferred to the right chamber of the internal hydraulic cylinder, and allows the push rod of the internal hydraulic cylinder to move leftward. Consequently, the mounting component 21 moves away from the first locking component 23. The deformation of the first locking component 23 is restored and the locked state is released, allowing the first sleeve 11 and the first telescopic tube 12 to slide telescopically. The entire locking and unlocking processes may be controlled by an external driving component 52 and realize rapid switching.

In some other embodiments, the internal hydraulic cylinder may be provided with an external liquid storage bag for thermal expansion and contraction regulation. That is, when the ambient temperature is too high or too low, the pressure of the internal hydraulic cylinder is compensated to a certain extent to a prevent cylinder explosion.

In some embodiments, referring to FIG. 1 to FIG. 3, the mounting component 21 includes a first piston cylinder (namely, the cylinder body of the internal pneumatic cylinder), and the sliding component 22 (namely, the push rod of the internal pneumatic cylinder) includes a first piston fitted with the first piston cylinder and a first piston rod arranged on the first piston. The first piston cylinder is communicated with the driving component 52. In the embodiments, the mounting component 21 and the sliding component 22 may have a structure of a pneumatic cylinder, and the corresponding external driving component 52 may also be a pneumatic cylinder. When work is done on the external pneumatic cylinder, the pressure inside the external pneumatic cylinder is increased and transferred to the internal pneumatic cylinder. Under the influence of the pressure, the first piston rod inside the internal pneumatic cylinder moves to drive the first piston to move, so that the first locking component 23 is deformed, completing the locking. When the work done on the external pneumatic cylinder is removed, the pressure of the compressed air inside the internal pneumatic cylinder is decreased, so that the piston inside the internal pneumatic cylinder rebounds, releasing the locking.

Further, a passage 221 communicated with the first piston cylinder is defined inside the first piston rod, and the driving mechanism 5 includes a connection tube 51 accommodated in the first tube 11. The connection tube 51 is configured to communicate the driving component 52 with the passage 221. In the embodiments, one end of the first piston rod extends out of the first piston cylinder, a deep hole is defined in the first piston rod, and a side wall of the first piston rod is defined with a connection hole communicating the deep hole with the interior of the first piston cylinder. The passage 221 is formed by the deep hole and the connection hole. The connection tube 51 is inserted into the opening of the deep hole located at the end of the first piston rod through a joint. It should be noted that the interior of the first piston cylinder may use pneumatic transmission or hydraulic transmission, which is not limited herein. The other end of the connection tube 51 is communicated with the external hydraulic cylinder or pneumatic cylinder. The external hydraulic cylinder or pneumatic cylinder may work on the internal hydraulic cylinder or pneumatic cylinder by manual drive or electric drive.

The connection tube 51 may be a helical tube. When the first tube 11 and the first telescopic tube 12 are unlocked and slide, the overall length of the tube assembly 10 is stretched, and the helical tube is stretched accordingly. When the tube assembly 10 is retracted, the helical tube can also retract, ensuring that the connection tube 51 does not become disordered inside the first tube 11.

In some embodiments, referring to FIG. 1 to FIG. 3, the first locking component 23 is arranged at the end of the piston rod located outside the piston cylinder, and is capable of being sleeved on the outer periphery of the piston cylinder. When the first locking component 23 is docked with the piston cylinder, the first locking component 23 can radially expand and abut against the inner wall of the first tube 11. In the embodiments, the first locking component 23 may be configured in the form of a cover, including a connection portion 231 and a deformation portion 232 provided around an outer peripheral edge of the connection portion 231. An end of the piston rod is connected to the center of the connection portion 231, and an outer wall of the end of the piston cylinder facing the first locking component 23 is provided with a certain taper to form an expansion portion 213. When the deformation portion 232 is docked with the expansion portion 213 of the piston cylinder, the deeper the docking depth, the more the deformation portion 232 expands outward to contact the inner wall of the first tube 11. The section where the deformation portion 232 is contacted with the inner wall of the first tube 11 is a locking portion 233. After the deformation portion 232 is separated from the expansion portion 213, the elastic deformation of the deformation portion 232 is restored, releasing the locking. The deformation of the first locking component 23 is completed by the first locking component 23 docking with the piston cylinder, without relying on other components, making the internal structure of the tube assembly 10 more compact.

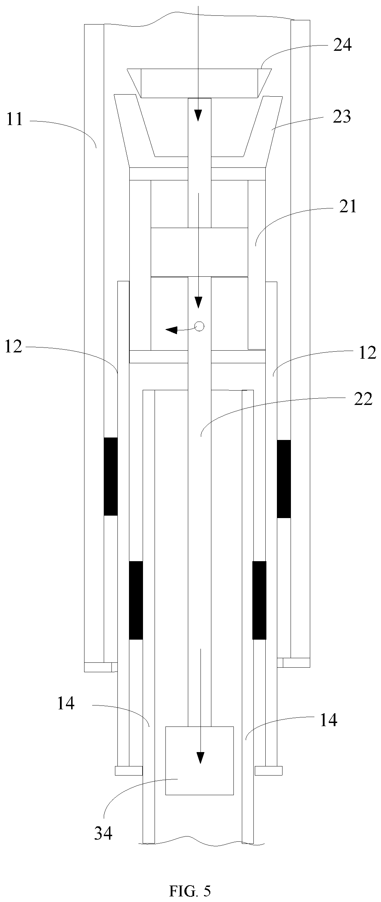

In some other embodiments, referring to FIG. 5, the first locking component 23 may be arranged on the piston cylinder, and the sliding component 22 further includes a first pushing component 24 arranged at the end of the piston rod located outside the piston cylinder. When the first pushing component 24 is docked with the first locking component 23, the first locking component 23 can radially expand and abut against the inner wall of the first tube 11. In the embodiments, the first locking component 23 is arranged on the piston cylinder, and the specific structure of the locking component 23 is also configured in the form of a cover, including a connection portion 231 and a deformation portion 232. The connection portion 231 is arranged on the piston cylinder, and the deformation portion 232 extends outward away from the piston cylinder. The first pushing component 24 may be a frustum, which functions similarly to the expansion portion 213, configured to push the deformation portion 232 to deform and abut against the inner wall of the first tube 11 to realize the locking.

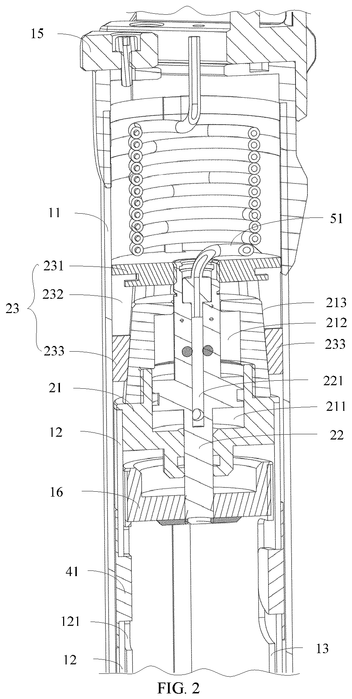

With further reference to FIG. 2, in order to prevent the first telescopic tube 12 from detaching from the lower end of the first tube 11, a first limiting component 42 may be provided at the lower end of the first tube 11. The first limiting component 42 is sleeved on the end of the first tube 11, and an end of the first limiting component 42 extends inward to form a flange. A second limiting component 41 is provided between the first tube 11 and the first telescopic tube 12. The second limiting component 41 may be a first arc-shaped plate mounted on an outer periphery of the first telescopic tube 12. The first telescopic tube 12 is defined with a limiting hole 121, and the inner side of the first arc-shaped plate is provided with a protrusion mated with the limiting hole 121. The limiting hole 121 plays a role for fixing the first arc-shaped plate. The second limiting component 41 may be made of Teflon, which has the effect of self-lubrication. When the first telescopic tube 12 is fully extended, the first arc-shaped plate is in contact with the flange at the end of the first limiting component 42, and the flange is configured to limit the first telescopic tube 12 and the first arc-shaped plate from detaching from the first tube 11.

In some embodiments, referring to FIG. 2 to FIG. 4, the tube assembly 10 further includes a second telescopic tube 14 arranged in the first telescopic tube 12. The second telescopic tube 14 is slidably connected with the first telescopic tube 12 along the axial direction of the first telescopic tube 12. The support leg assembly further includes a second locking mechanism 30 arranged at the end of the tube assembly 10 away from the first locking mechanism 20. The second locking mechanism 30 is configured to lock or unlock the second telescopic tube 14. The first locking mechanism 20 is interlinked with the second locking mechanism 30, which realizes synchronous locking and synchronous unlocking of the first telescopic tube 12 and the second telescopic tube 14, allowing the support leg assembly to support one-touch unlocking or one-touch locking.

Specifically, referring to FIG. 5, the end of the sliding component 22 away from the first locking component 23 is a connection end, and the sliding component 22 is arranged to pass through the mounting component 21; that is, the first piston rod is arranged to pass through the first piston cylinder. The end of the first piston rod away from the first locking component 23 is the connection end. The connection end is located outside the mounting component 21 and extends into the second telescopic tube 14. The second locking mechanism 30 includes a bladder 34 arranged at the connection end and communicated with the passage. The bladder 34 is capable of expanding to lock the second telescopic tube 14. In the embodiments, the deep hole in the mounting component 21 may extend to the connection end and is communicated with the bladder 34. Under the action of an external force, the external hydraulic cylinder or pneumatic cylinder has an increased internal pressure and transfers the medium to the first piston cylinder and the bladder 34, such that the bladder 34 expands to contact the second telescopic tube 14, completing the locking of the second telescopic tube 14.

In some other embodiments, besides employing the built-in bladder 34 for internal locking, the second locking mechanism 30 also allows external locking implementation. The external locking implementation is as follows:
In some embodiments, referring to FIG. 1 to FIG. 4, the tube assembly 10 further includes a transmission tube 13 arranged in the first telescopic tube 12 and a second telescopic tube 14 arranged in the transmission tube 13. The transmission tube 13 is axially slidably connected to both the first telescopic tube 12 and the second telescopic tube 14. The connection end is provided with a connection component 16, and the transmission tube 13 is connected with the connection component 16. The transmission tube 13 is fixedly connected with the sliding component 22 via the connection component 16, so that the transmission tube 13 can slide synchronously with the first telescopic tube 12 inside the first tube 11. The second telescopic tube 14 slides in the transmission tube 13, thus the support assembly incorporates a two-stage telescopic mechanism. The second locking mechanism 30 may be arranged at the end of the transmission tube 13 away from the connection component 16, and transmits the motion of the sliding component 22 to the second locking mechanism 30, allowing the two locking mechanisms to achieve synchronous locking and synchronous unlocking.

As shown in FIG. 2, the connection component 16 may be a disc-shaped component, with its outer peripheral side wall fixedly connected to the inner side wall of the upper end of the transmission tube 13, and the sliding component 22 is screwed to the central area of the disc component, which is convenient for installation and has a stable structure. In some other embodiments, part or all of the sliding component 22 may be integrally formed with the connection component 16; and/or, the connection component 16 is integrally formed with the transmission tube 13. The sliding component 22 may be an assembly of a plurality of members, or may be integrally formed, which is not limited herein. The present disclosure does not limit the specific shape of the connection component 16, as long as it can realize the function of connecting the sliding component 22 with the transmission tube 13.

Specifically, the second locking mechanism 30 may also adopt a locking mechanism similar to the first locking component 23, achieving a dead-locking effect through elastic deformation. The upper end of the transmission tube 13 may be fixedly connected to the sliding component 22, for example, by means of a threaded connection, and the lower end of the transmission tube 13 is connected to the second locking mechanism 30. When the driving mechanism 5 drives the sliding component 22 to slide to lock the first tube 11 and the first telescopic tube 12, the second locking mechanism 30 can complete locking due to the transmission function of the transmission tube 13. Thus, the second locking mechanism 30 is interlinked with the first locking mechanism 20, realizing synchronous locking and synchronous unlocking.

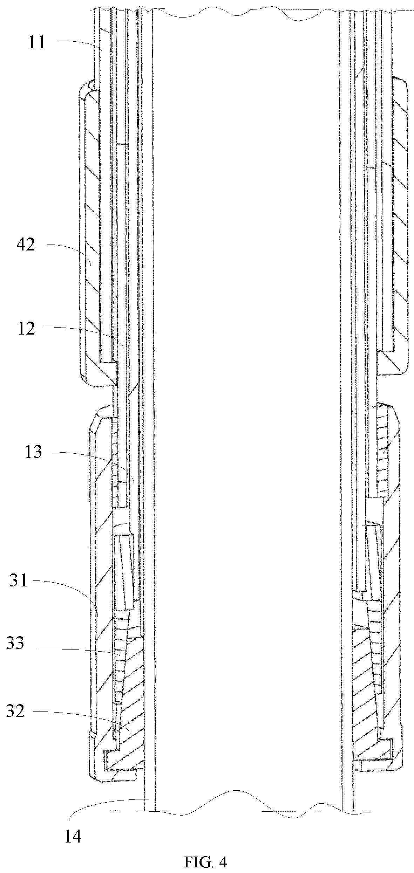

Referring to FIG. 4, the second locking mechanism 30 may include: a second locking component arranged at the end of the first telescopic tube 12 away from the first locking mechanism 20, and a second pushing component 33 arranged at the end of the transmission tube 13 away from the first locking mechanism 20. The second pushing component 33 is capable of docking with the second locking component, and allowing the second locking component to elastically deform and come into contact with the outer wall of the second telescopic tube 14, thereby locking the first telescopic tube 12, the transmission tube 13, and the second telescopic tube 14.

In the embodiments, the second locking component includes a mounting sleeve 31 arranged at an end of the first telescopic tube 12, and a locking sleeve 32 arranged in the mounting sleeve 31. The locking sleeve 32 extends from the end of the mounting sleeve 31 to the inside of the mounting sleeve 31, and the second telescopic tube 14 can slide inside the locking sleeve 32. There is a gap between the mounting sleeve 31 and the locking sleeve 32. The second pushing component 33 can follow the transmission tube 13 to axially move in the gap. The second pushing component 33 may be designed to a shape of an annular sleeve with a wedge-shaped cross-section. When the second pushing component 33 is pushed into the gap, it can push the locking sleeve 32 to deform and clamp the second telescopic tube 14, completing the locking. The second pushing component 33 is also fixed in the gap, and the lower end of the first telescopic tube 12 is locked with the lower end of the transmission tube 13. When the second pushing component 33 moves away from the locking sleeve 32, the elastic deformation of the locking sleeve 32 is restored, releasing the locked state of the first telescopic tube 12, the transmission tube 13 and the second telescopic tube 14.

It should be noted that, in order to prevent the second telescopic tube 14 from detaching from the lower end of the transmission tube 13, a fourth limiting component may be provided at the lower end of the first telescopic tube 12. The locking sleeve 32 may serve as the fourth limiting component to play a role of limiting. A third limiting component is provided between the transmission tube 13 and the second telescopic tube 14. The third limiting component may be a second arc-shaped plate mounted on the outer periphery of the second telescopic tube 14. The second telescopic tube 14 is defined with a mounting hole, and the inner side of the second arc-shaped plate is provided with a protrusion mated with the mounting hole. The third limiting component may be made of Teflon, which has the effect of self-lubrication. When the second telescopic tube 14 is fully stretched, the second arc-shaped plate is in contact with the end of the locking sleeve 32. The locking sleeve 32 is configured to prevent the second telescopic tube 14 and the second arc-shaped plated from detaching from the transmission tube 13.

In some embodiments, since the first telescopic tube 12 and the transmission tube 13 are connected by an internal hydraulic or pneumatic cylinder, a travel distance of the transmission tube 13 is limited by a travel distance of the sliding component 22. However, in the event of failure of the internal hydraulic or pneumatic cylinder, the transmission tube 13 may be detached from the first telescopic tube 12. Therefore, it is necessary to provide a limiting assembly to restrict the movement of the two. The limiting assembly is configured to limit a travel distance of relative sliding between the first telescopic tube 12 and the transmission tube. Specifically, the limiting assembly includes the first arc-shaped plate described above. The transmission tube is defined with a strip-shaped hole extending along its axial direction and corresponding to the limiting hole 121. The protrusion on the first arc-shaped plate passes through the limiting hole 121 and extends into the strip-shaped hole, and is slidable in the strip-shaped hole, thereby achieving the purpose of limiting the travel distance of the relative sliding between the first telescopic tube 12 and the transmission tube 13.

In some embodiments, referring to FIG. 2, an elastic component may be provided in the internal hydraulic cylinder. The elastic component provides an elastic force to push the push rod of the internal hydraulic cylinder to move in the forward direction, allowing the mounting component 21 to come into contact with the first locking component 23. Consequently, the first locking component 23 is elastically deformed and contacted with the inner wall of the first sleeve 11. Under the action of friction, the first telescopic tube 12, which is connected to the first locking component 23, remains the locked state with the first tube 11. The elasticity of the elastic component maintains the locked state.

When unlocking is required, the external hydraulic cylinder is driven to allow the push rod of the internal hydraulic cylinder to move in the reverse direction. The elastic component is compressed, such that the push rod drives the first locking component 23 to move away from the mounting component 21. The elastic deformation of the first locking component 23 is restored, allowing it to separate from the inner wall of the first tube 11. Consequently, the locked state between the first telescopic tube 12, which is connected with the first locking component 23, and the first tube 11 is released.

Further, the first piston may separate the inner chamber of the first piston cylinder into two chambers, one of which is a working chamber 211 communicating with the external hydraulic cylinder, and the other one of which is a mounting chamber 212 for mounting the elastic component. The elastic component may be arranged between the connection component 16 and the mounting component 21. One end of the elastic component abuts against the mounting component 21, and the other end of the elastic component abuts against the connection component 16. The side surface of the connection component 16 facing the mounting component 21 is concavely defined with a mounting groove for accommodating and positioning the elastic component.

The present disclosure further provides a telescopic bracket. Referring to FIG. 1 to FIG. 6, the telescopic bracket includes a mounting base 6 and the foregoing support leg assembly. At least one support leg assembly is provided, such as a monopod, a tripod, etc. The tube assembly 10 is rotatably arranged on the mounting base 6, and the driving component 52 is arranged on the mounting base 6. In the embodiment, multiple support leg assemblies may be provided. The first locking mechanism 20 of each support leg assembly is connected with the driving component 52. The driving component 52 may drive multiple first locking mechanisms 20 to operate in linkage, completing synchronous locking or synchronous unlocking. In practical applications, the telescopic bracket may be a tripod, and the tube assemblies 10 serves as the telescopic legs of the tripod.

In an initial state, the first telescopic tube 12 is accommodated in the first tube 11. Under the action of the elastic component, the mounting component 21 is in contact with the first locking component 23, to allow the first locking component 23 to elastically deform and come into contact with the inner wall of the first tube 11, thereby locking the first telescopic tube 12.

When the tube assembly 10 is required to be stretched, work may be done on the driving component 52. The driving component 52 drives the sliding component 22 and the mounting component 21 to move relative to each other, to allow the mounting component 21 to separate from the first locking component 23, thereby unlocking the first telescopic tube 12. Under the action of gravity, the first telescopic tube 12 may slide down from the first tube 11.

In the unlocked state, the height and pitch angle of the mounting base 6 may be adjusted. Three first telescopic tubes 12 may automatically drop and contact the ground, with each tube's extended length being just sufficient to maintain the aforementioned height and pitch angle.

After the height and the pitch angle are adjusted, the external force working on the driving component 52 is removed, and the elastic force of the elastic component can drive the sliding component 22 to move downward and reset. Consequently, the first locking component 23 is in contact with the mounting component 21 again and elastically deformed, thereby locking the first telescopic tube 12.

The external hydraulic cylinder may be communicated with three internal hydraulic cylinders by a flow divider. By applying an external force to do work on the external hydraulic cylinder, three tube assemblies 10 can be unlocked synchronously. After the external force is removed, the three tube assemblies 10 are synchronously locked under the action of the elastic component. The entire adjustment process is fast and convenient, and there is no need to operate each tube assembly 10 separately.

It can be understood that, when it is necessary to retract the bracket, work may be done on the external hydraulic cylinder, to unlock all the tube assemblies 10 synchronously and to slowly lower the mounting base 6 until all the tube assemblies 10 are completely retracted; and then, the force working on the external hydraulic cylinder is removed, to lock all the tube assemblies 10 again.

In the above embodiments, a one-stage telescopic mechanism is adopted; that is, only the first tube 11 and the first telescopic tube 12 are involved in the telescoping action. In the configuration that the support leg assembly and the telescopic bracket incorporates a two-stage telescopic mechanism, the transmission tube 13 and the second telescopic tube 14 can also be telescopic. When work is done on the external hydraulic cylinder, the push rod thereof moves relative to the cylinder body to drive the sliding component 22 to move upward. The first locking mechanism 20 and the second locking mechanism 30 are unlocked, such that the first telescopic tube 12 and the transmission tube 13 are synchronously stretched from the first tube 11, and the second telescopic tube 14 is stretched from the transmission tube 13. After the adjustment of the height and the pitch angle of the mounting base 6 is completed, the work on the external hydraulic cylinder is removed. the elastic component drives the sliding component 22 to move downward and retract, such that the first locking mechanism 20 locks the first tube 11 and the first telescopic tube 12, and the second locking mechanism 30 locks the transmission tube 13 and the second telescopic tube 14.

Besides, in the one-stage telescopic mechanism and the two-stage telescopic mechanism, the tube may make direct contact with the ground or indirect contact via an intermediate component. The intermediate component may be a support base arranged at the end of the first telescopic tube 12 or the second telescopic tube 14.

It should be noted that the end of the first tube 11 is further provided with a connection base 15. The end of the connection base 15 away from the first tube 11 is hinged with the mounting base 6, and the helical tube is arranged in the first tube 11 and located in the area between the connection base 15 and the first locking component 23.

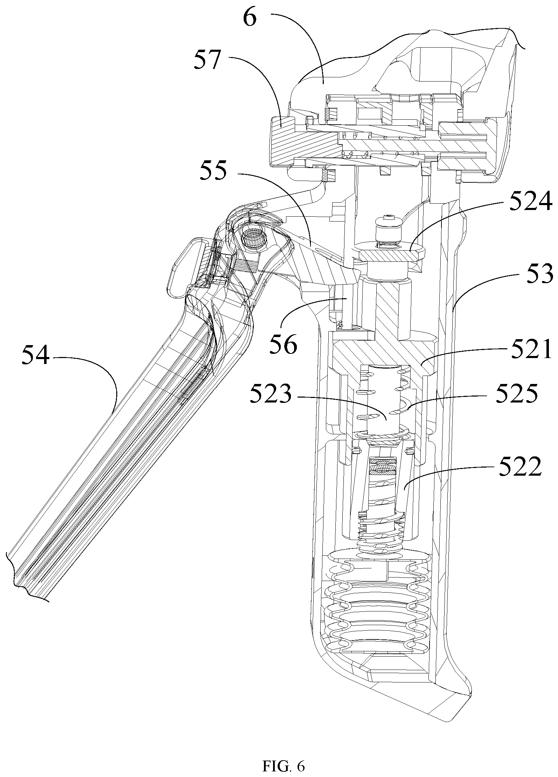

Referring to FIG. 6, the driving mechanism 5 further includes a hold portion 53 and a movable handle 54. The movable handle 54 is arranged on the hold portion 53 and hinged with the hold portion 53. The hold portion 53 is arranged on the mounting base 6. The external hydraulic cylinder or pneumatic cylinder is arranged in the hold portion 53. The driving component 52 includes a second piston cylinder 521, a second piston 522 arranged in the second piston cylinder 521, and a second piston rod 523 connected to the second piston 522. The second piston rod 523 and the second piston 522 form a second push rod. By operating the movable handle 54, work may be done on the external hydraulic cylinder, to push the second piston rod 523 to move, allowing for manual control of the locked state of the support leg assembly.

In some embodiments, the movable handle 54 is arranged on one side of the hold portion 53, and the side of the movable handle 54 close to the hold portion 53 is provided with a push fork 55. The free end of the second piston rod 523 is provided with a limiting plate 524. When a user grips the movable handle 54 and the hold portion 53, the movable handle 54 moves towards the hold portion 53. At this time, a grip force applied externally performs work on the external hydraulic cylinder. The movable handle 54 can push the push fork 55 to abut against the limiting plate 524, and push the limiting plate 524 to move, so as to drive the second piston rod 523 to stretch outward, completing the unlocking operation.

After the external force applied to the movable handle 54 is removed, a reset spring 525 provided in the external hydraulic cylinder pushes the second piston rod 523 to reset and retract, so that the movable handle 54 and the push fork 55 move away from the limiting plate 524, completing the locking operation. The elastic component located in the internal hydraulic cylinder can also assist the locking, which shortens the duration of the locking process.

In order to prevent the movable handle 54 from being accidentally touched or the locked state from being compromised, a stopping component (not shown in the drawings) may be provided on the hold portion 53 to lock the hold portion 53. The hold portion 53 is hinged with the mounting base 6. After pressing or activating the locking component, the hold portion 53 can rotate about the mounting base 6 and is stored to a preset position, such that the hold portion 53 moves towards the central axis of the mounting base 6 to create a space for shooting clearance. After the hold portion 53 is rotated about the mounting base 6 and reset, the stopping component can automatically reset to lock the hold portion 53 again.

The second piston cylinder 521 is communicated with the connection tube 51 of the first piston cylinder through a guiding tube 56. It should be noted that, in a configuration that multiple support leg assemblies are arranged on the mounting base 6, the guiding tube 56 of the external hydraulic cylinder or pneumatic cylinder may be communicated with each connection tube 51 through the flow divider, to realize synchronous locking and unlocking of the multiple support leg assemblies. The term "external" used in the external pneumatic cylinder and the external hydraulic cylinder is relative to the tube assembly 10, meaning that these components are located outside of the tube assembly 10.

In the embodiment, the working principles of the support leg assemblies and the telescopic bracket are explained as follows, with the mounting component 21, the sliding component 22, and the driving component all being hydraulic cylinders, and the telescopic bracket being provided with three support leg assemblies.

Before using the telescopic bracket, all the tubes in the tube assemblies 10 are completely retracted, the tube assemblies 10 are completely locked, and the hold portion 53 is close to the tube assemblies 10. Under the action of the elastic component and the reset spring, the second piston rod 523 is in a downwardly stretched state. The mounting component 21 is contacted with the first locking component 23, such that the first locking component 23 is elastically deformed and contacted with the inner wall of the first tube 11, thereby locking the first telescopic tube 12. The second pushing component 33 is docked with the second locking component, such that the second locking component is elastically deformed and contacted with the outer wall of the second telescopic tube 14, thereby locking the first telescopic tube 12, the transmission tube 13, and the second telescopic tube 14.

The hold portion 53 is operated to rotate about the mounting base 6 to an initial position away from the tube assembly 10, and the stopping component resets to lock the hold portion 53, which is convenient for users to operate the movable handle 54. When the movable handle 54 and the hold portion 53 are gripped, the movable handle 54 moves toward the hold portion 53, and at this time, the external grip force performs work on the external hydraulic cylinder. The movable handle 54 may push the push fork 55 to abut against the limiting plate 524 and push the limiting plate 524 to move, thereby driving the second piston rod 523 to stretch outward. The change of the hydraulic pressure of the external hydraulic cylinder is transferred to the internal hydraulic cylinder through each connection tube 51 communicated with the guiding tube 56 and causes the change of the hydraulic pressure of the internal hydraulic cylinder, which in turns causes the first piston rod (the sliding component 22) of the internal hydraulic cylinder to stretch upward. As a result, the first locking component 23 is driven away from the mounting component 21, such that the elastic deformation of the first locking component 23 is restored, and the locking component 23 is separated from the inner wall of the first tube 11, releasing the locking between the first telescopic tube 12, which is mounted on the mounting component 21, and the first sleeve 11.

Moreover, since the upward extension motion of the sliding component 22 drives the transmission tube 13 to move upward, the transmission tube 13 can drive the second pushing component 33 to separate from the second locking component. The elastic deformation of the second locking component is restored, and it separates from the outer wall of the second telescoping tube 14, such that the first telescoping tube 12, the drive tube 13, and the second telescoping tube 14 are completely unlocked.

After all tube assemblies 10 are synchronized and completely unlocked, the first telescopic tubes 12 and the second telescopic tubes 14 automatically stretch downward and contact the ground; or they may first contact the ground and then each tube assembly 10 is stretched upward. After adjusting the height and pitch angle of the mounting base 6, the stretching length of each of the three tube assemblies 10 can just maintain the above height and pitch angle. At this time, the grip force on the movable handle 54 and the hold portion can be removed, and the reset spring 525 arranged in the external hydraulic cylinder pushes the second piston rod 523 to reset and retract, so that the movable handle 54 and the push fork 55 move away from the limiting plate 524, completing the locking operation. The elastic component located in the internal hydraulic cylinder may also assist in the locking operation.

The locking process of the tube assembly 10 is the reverse of the unlocking process of the tube assembly 10. In the locking process of the tube assembly 10, the second piston rod 523 retracts to drive the sliding component 22 (the first piston rod) to retract downward, and the first locking component 23 approaches the first pushing component 24 or the mounting component 21. The first locking component 23 expands radially and is contacted with the first telescopic tube 12, completing the locking of the first telescopic tube 12 and the first tube 11.

The second pushing component 33 moves along with the transmission tube 13 and the sliding component 22, and pushes the second locking component to deform so as to clamp the second telescopic tube. The lower end of the first telescopic tube 12, the lower end of the second telescopic tube, and the lower end of the transmission tube are also locked.

In order to prevent the movable handle 54 from being accidentally touched or the locked state from being compromised, after pressing or activating the stopping component, the hold portion 53 may be operated to rotate about the mounting base 6 and stored into a preset position, such that the hold portion 53 moves towards the central axis of the mounting base 6 to create a space for shooting clearance.

When it is necessary to store the tube assemblies 10 after completing a shooting task or to readjust the telescopic lengths of the tube assemblies 10, the hold portion 53 and the movable handle 54 may be gripped to completely unlock the tube assemblies 10. After it is determined that the storage or length adjustment is completed, the hold portion 53 and the movable handle 54 are released, and then the tube assemblies 10 are locked.

The above-mentioned are only part or preferred embodiments of the present disclosure, and neither the words nor the drawings can limit the scope of protection of the present disclosure. Any equivalent structural transformation made by using the specification and drawings of the present disclosure under the concept of the present disclosure as a whole, or directly/indirectly applied in other related technical fields are included in the scope of protection of the present disclosure.

## Claims

1. A support leg assembly, comprising:
a tube assembly (10) comprising a first tube (11) and a first telescopic tube (12) sleeved with the first tube (11);
a first locking mechanism (20); and
a driving mechanism (5); wherein,
the first locking mechanism (20) comprises a mounting component (21) arranged on the first telescopic tube (12), a sliding component (22) slidably connected with the mounting component (21) along an axial direction of the mounting component (21), and a first locking component (23) arranged on the sliding component (22);
the driving mechanism (5) comprises a driving component (52) arranged outside the tube assembly (10), and the driving component (52) is configured to drive the sliding component (22) to slide relative to the mounting component (21), to allow the mounting component (21) to contact or move away from the first locking component (23); and
the first locking component (23) is capable of elastically deforming and coming into contact with an inner wall of the first tube (11) in a case that the first locking component (23) is in contact with the mounting component (21), to lock the first tube (11) and the first telescopic tube (12);
or
the first locking mechanism (20) comprises a mounting component (21) arranged on the first telescopic tube (12), a sliding component (22) slidably connected with the mounting component (21) along an axial direction of the mounting component (21), a first locking component (23) arranged on the mounting component (21), and a first pushing component (24) arranged on the sliding component (22);
the driving mechanism (5) comprises a driving component (52) arranged outside the tube assembly (10), and the driving component (52) is configured to drive the sliding component (22) to slide relative to the mounting component (21), to allow the first pushing component (24) to contact or move away from the first locking component (23); and
the first locking component (23) is capable of elastically deforming and coming into contact with an inner wall of the first tube in a case that the first locking component (23) is in contact with the first pushing component (24), to lock the first tube (11) and the first telescopic tube (12).

2. The support leg assembly according to claim 1, wherein
the mounting component (21) comprises a first piston cylinder;
the sliding component (22) comprises a first piston fitted with the first piston cylinder and a first piston rod arranged on the first piston;
wherein the first piston cylinder is communicated with the driving component (52).

3. The support leg assembly according to claim 2, wherein
a passage (221) communicated with the first piston cylinder is defined inside the first piston rod; and
the driving mechanism (5) further comprises a connection tube (51) accommodated in the first tube (11) and configured to communicate the driving component (52) with the passage (221).

4. The support leg assembly according to claim 2, wherein the tube assembly (10) further comprises a second telescopic tube (14) arranged in the first telescopic tube (12), and the second telescopic tube (14) is slidably connected with the first telescopic tube (12) along an axial direction of the first telescopic tube (12);
the support leg assembly further comprises a second locking mechanism (30) arranged at an end of the tube assembly (10) away from the first locking mechanism (20), and the second locking mechanism (30) is configured to lock or unlock the second telescopic tube (14); and
the first locking mechanism (20) and the second locking mechanism (30) are interlinked.

5. The support leg assembly according to claim 4, wherein an end of the sliding component (22) away from the first locking component (23) is a connection end, and the connection end is located outside the mounting component (21) and is configured to be connected with the second locking mechanism (30).

6. The support leg assembly according to claim 5, wherein the connection end extends into the second telescopic tube (14); and
the second locking mechanism (30) comprises a bladder (34) arranged at the connection end, the bladder (34) is communicated with the driving component (52), and the bladder (34) is capable of expanding to lock the second telescopic tube (14).

7. The support leg assembly according to claim 5, wherein the tube assembly (10) further comprises a transmission tube (13) arranged between the second telescopic tube (14) and the first telescopic tube (12), and the transmission tube (13) is slidably connected with the second telescopic tube (14) along an axial direction of the second telescopic tube (14); and
the connection end is provided with a connection component (16), an end of the transmission tube (13) is fixedly connected with the connection component (16), and another end of the transmission tube (13) away from the connection component (16) is connected with the second locking mechanism (30).

8. The support leg assembly according to claim 7, wherein the second locking mechanism (30) further comprises:
a second locking component arranged at an end of the first telescopic tube (12) away from the first locking mechanism (20); and
a second pushing component (33) arranged at an end of the transmission tube (13) away from the first locking mechanism (20);
wherein the second pushing component (33) is capable of docking with the second locking component, to allow the second locking component to elastically deform and contact an outer wall of the second telescopic tube (14), so as to lock the first telescopic tube (12) and the second telescopic tube (14).

9. The support leg assembly according to claim 7, further comprising:
a limiting assembly connecting the first telescopic tube (12) and the transmission tube (13);
wherein the limiting assembly is configured to limit a travel distance of relative sliding between the first telescopic tube (12) and the transmission tube (13).

10. The support leg assembly according to claim 3, wherein the driving mechanism (5) further comprises:
an elastic component elastically connected to the mounting component (21);
wherein the elastic component is configured to provide an elastic force to reset the mounting component (21) and allow the first locking component (23) to be locked;
the elastic component is located in the first piston cylinder, an end of the elastic component is connected with the first piston, and the other end of the elastic component is connected with an inner wall of the first piston cylinder; or, the elastic component is located outside of the mounting component (21) and abuts against a bottom end of the mounting component (21).

11. A telescopic bracket, comprising:
a mounting base (6); and
the support leg assembly according to any one of claims 1 to 10;
wherein the tube assembly (10) is rotatably arranged on the mounting base (6), and the driving component (52) is arranged on the mounting base (6).

12. The telescopic bracket according to claim 11, wherein
the mounting component (21) comprises a first piston cylinder, the sliding component (22) comprises a first piston fitted with the first piston cylinder and a first piston rod arranged on the first piston, and the first piston cylinder is communicated with the driving component (52);
a passage (221) communicated with the first piston cylinder is defined inside the first piston rod, and the driving mechanism (5) further comprises a connection tube (51) accommodated in the first tube (11) and configured to communicate the driving component (52) with the passage (221);
the driving component (52) comprises:
a second piston cylinder arranged on the mounting base (6);
a second piston fitted with the second piston cylinder; and
a second piston rod arranged on the second piston, the second piston cylinder being communicated with the passage (221) through the connection tube (51);
the driving mechanism (5) further comprises a handle (54) arranged on the mounting base (6), the handle (54) is configured to pull the second piston rod to move to unlock the first tube (11) and the first telescopic tube (12), and the handle (54) is driven to reset so as to lock the first tube (11) and the first telescopic tube (12) in a case that the second piston rod is reset.

13. The telescopic bracket according to claim 11, wherein
the support leg assembly is one of at least three support leg assemblies, and the driving component (52) is configured to drive the at least three support leg assemblies to be synchronously locked or synchronously unlocked.
